# DEMANDE DE BREVET EUROPEEN

(11) **EP 1 956 573 A1**
(43) Date de publication de la demande: **13.08.2008**
(21) Numéro de dépôt: 08290083.8
(22) Date de dépôt: 30.01.2008
(51) Int. Cl.: G08C 23/04, H04B 10/10

(54) **Dispositif de transmission infrarouge, et application**

(30) Priorité: 09.02.2007 FR 0700958
(71) Demandeur: LEGRAND FRANCE, 87000 Limoges (FR); LEGRAND SNC, 87000 Limoges (FR)
(72) Inventeur: Goudal, Jean-Paul, 87000 Limoges (FR); Naboulet, Fabrice, 87240 Saint Laurent les Eglises (FR)
(74) Mandataire: Bentz, Jean-Paul

(57) **Abrégé**

L'invention concerne un dispositif de transmission infrarouge, comprenant au moins un boîtier (1) conçu pour être fixé à un support tel qu'un mur, un premier circuit imprimé (21), au moins un sous-ensemble de transmission (210), et des composants électroniques (220, 230), le sous-ensemble de transmission (210) étant monté sur le premier circuit imprimé (21), étant relié aux composants électroniques (220, 230) et comprenant au moins une diode infrarouge (211).

Selon l'invention, le sous-ensemble de transmission (210) est rendu mobile grâce à deux tourillons (41, 42) offrant à ce sous-ensemble (210) une liberté de rotation autour d'un axe (X) de basculement zénithal, ces tourillons étant en outre engagés dans deux rainures (141, 142) du boîtier (1) pour offrir à ce sous-ensemble (210) une liberté de rotation autour d'un axe (Y) de réglage azimutal.

## Description

L'invention concerne, de façon générale, la conception des appareillages électriques.

Plus précisément, l'invention concerne un dispositif de transmission infrarouge, comprenant au moins un boîtier conçu pour être fixé à un support tel qu'un mur, un premier circuit imprimé, au moins un sous-ensemble de transmission, et des composants électroniques, le sous-ensemble de transmission étant monté sur le premier circuit imprimé, étant relié aux composants électroniques et comprenant au moins une diode infrarouge, ce dispositif comprenant des premier et deuxième tourillons auxquels le premier circuit imprimé est rendu solidaire, et ces tourillons étant disposés dans une position diamétrale du premier circuit imprimé de manière à former ensemble un axe de basculement zénithal pour ce premier circuit imprimé.

Le principal problème que visent à résoudre les dispositifs de ce type est celui du choix et de l'optimisation de leur implantation.

En effet, ces dispositifs doivent offrir un fonctionnement totalement satisfaisant quels que soient la forme et les dimensions des locaux dans lesquels ils sont installés, alors même que le rayonnement infrarouge ne se propage spontanément qu'en ligne droite et ne peut changer de direction qu'après réflexion sur un obstacle.

Les documents de brevets US 4 724 600 et EP 0 784 389 décrivent des dispositifs de transmission visant à résoudre ce problème.

Pour ce faire, le brevet US 4 724 600 préconise l'emploi de tubes flexibles dont la déformation permet d'orienter le sous-ensemble de transmission.

Le document de brevet EP 0 784 389 propose quant à lui un dispositif du type précédemment défini, dans lequel le sous-ensemble de transmission est monté sur un cardan, ce dispositif exigeant donc la présence de deux axes physiques perpendiculaires et indépendants.

Dans ce contexte, la présente invention a précisément pour but de proposer un dispositif de transmission infrarouge autorisant la même souplesse d'installation, mais présentant une structure sensiblement plus simple.

A cette fin, le dispositif de l'invention, par ailleurs conforme à la définition générique qu'en donne le préambule ci-dessus, est essentiellement caractérisé en ce que le sous-ensemble de transmission est relié aux composants électroniques au moyen de conducteurs souples, et en ce que le boîtier comporte des première et deuxième rainures au moins partiellement circulaires, s'étendant dans un même plan moyen, et dans lesquelles les premier et deuxième tourillons sont respectivement logés à la fois avec une liberté de rotation autour de l'axe de basculement zénithal, et avec une liberté de rotation autour d'un axe de réglage azimutal, perpendiculaire à l'axe de basculement zénithal et au plan moyen des rainures, le premier circuit imprimé étant ainsi monté dans une position réglable dans le boîtier.

Par exemple, il est possible de prévoir que le boîtier comprenne un capot et une pièce de verrouillage montée de façon amovible dans le capot, les première et deuxième rainures étant définies entre ce capot et cette pièce de verrouillage.

Il est en particulier avantageux que ce dispositif comprenne une coiffe hémisphérique portant les tourillons et présentant une ouverture circulaire interne au boîtier, que le premier circuit imprimé soit encliqueté dans l'ouverture de la coiffe et présente une forme au moins partiellement circulaire, et que la coiffe soit transparente aux rayons infrarouge et renferme le sous-ensemble de transmission.

Le sous-ensemble de transmission comprend par exemple au moins une première diode infrarouge orientée perpendiculairement au premier circuit imprimé, et des deuxième et troisième diodes infrarouge disposées dans un même plan perpendiculaire au premier circuit imprimé, de façon oblique par rapport à ce premier circuit imprimé, et symétriquement l'une de l'autre par rapport à un plan axial médian du premier circuit imprimé passant par la première diode.

Par ailleurs, un patin conçu pour bloquer la coiffe dans une position réglée peut être sélectivement fixé au capot.

Les composants électroniques comprennent par exemple des composants électroniques de commande et des composants électroniques de puissance, les composants électroniques de commande pouvant être implantés sur un deuxième circuit imprimé, lui-même relié au premier circuit imprimé par une nappe multiconductrice constituant lesdits conducteurs souples, et les composants électroniques de puissance pouvant être implantés sur un troisième circuit imprimé, disposé dans le boîtier parallèlement au deuxième circuit imprimé et relié à ce deuxième circuit imprimé par des conducteurs rigides.

De préférence, le boîtier comprend en outre un socle sur lequel le capot est encliqueté, les deuxième et troisième circuits imprimés étant logés dans un volume interne défini par le socle et le capot.

Les composants électroniques de commande peuvent être conçus pour utiliser les diodes infrarouge au moins en tant que récepteurs de signaux infrarouge, et avantageusement en tant qu'émetteurs et récepteurs de signaux infrarouge.

Le dispositif selon l'invention est particulièrement bien adapté à la réalisation d'un relais de commande d'un appareil électrique, tel qu'un climatiseur.

D'autres caractéristiques et avantages de l'invention ressortiront clairement de la description qui en est faite ci-après, à titre indicatif et nullement limitatif, en référence aux dessins annexés, dans lesquels :

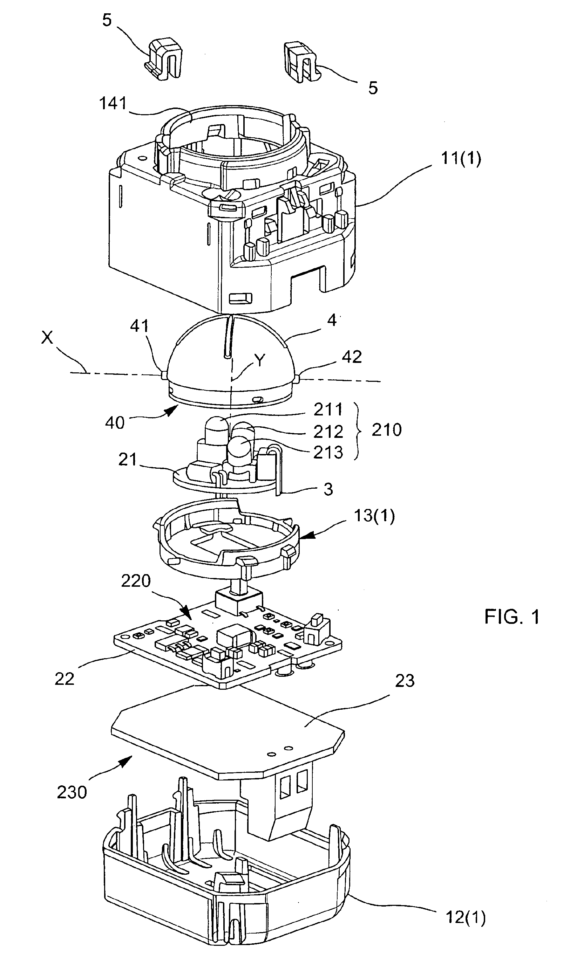

- la figure 1 est une vue éclatée en perspective d'un dispositif conforme à l'invention;

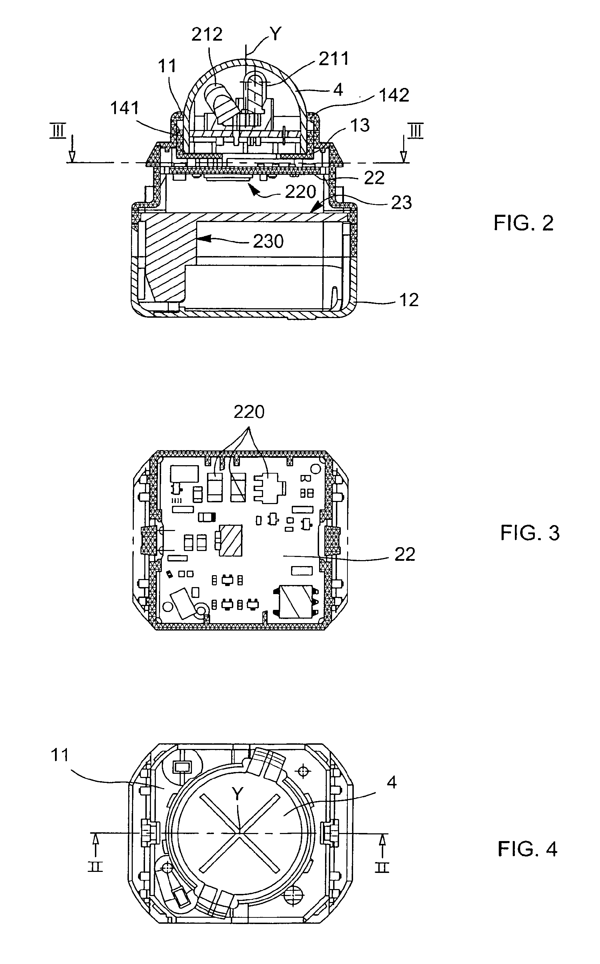

- la figure 2 est une vue schématique en coupe, suivant un plan axial médian, du dispositif illustré à la figure 1, ce dispositif étant observé après montage et suivant l'incidence repérée par les flèches II-II de la figure 4;
- la figure 3 est une vue en coupe transversale du dispositif illustré aux figures 1 et 2, ce dispositif étant observé suivant l'incidence repérée par les flèches III-III de la figure 2; et
- la figure 4 est une vue de dessus du dispositif illustré à la figure 1.

Comme indiqué précédemment, l'invention concerne un dispositif de transmission infrarouge.

Ce dispositif comprend notamment un boîtier 1 par lequel il peut être fixé à un support tel qu'un mur, un premier circuit imprimé 21, un sous-ensemble de transmission infrarouge 210, et des composants électroniques tels que 220 et 230.

Le sous-ensemble de transmission 210, qui comprend lui-même une ou plusieurs diodes infrarouge telles que 211, 212 et 213, est monté sur le circuit imprimé 21 et relié aux composants électroniques 220 et 230.

Le circuit imprimé 21 est monté dans une position réglable dans le boîtier 1, et le sous-ensemble de transmission 210 est relié aux composants électroniques 220 et 230 au moyen au moins de conducteurs souples prenant par exemple la forme d'une nappe multiconductrice 3.

Dans le mode de réalisation illustré, le dispositif comprend une coiffe hémisphérique 4 qui porte des tourillons 41 et 42, qui présente une ouverture circulaire 40 interne au boîtier 1, et qui est transparente aux rayons infrarouge.

Le circuit imprimé 21, qui présente une forme au moins partiellement circulaire, est encliqueté dans l'ouverture 40 de la coiffe 4, de sorte que ce circuit 21 est rendu solidaire des tourillons 41 et 42, et que la coiffe 4 renferme le sous-ensemble de transmission 210.

Par ailleurs, le boîtier 1 comprend un capot 11, un socle 12, et une pièce de verrouillage 13, la pièce 13 étant montée de façon amovible dans le capot 11 et par exemple encliquetée sur le capot 11.

Le capot 11 et la pièce de verrouillage 13 définissent entre eux deux rainures au moins partiellement circulaires, 141 et 142, qui s'étendant dans un même plan moyen et qui peuvent éventuellement se rejoindre pour former une unique rainure circulaire.

Les tourillons 41 et 42 sont disposés dans une position diamétrale pour le circuit imprimé 21 et forment ensemble, pour ce circuit 21, un axe X de basculement zénithal.

Ces tourillons 41 et 42 sont en outre respectivement logés dans les rainures 141 et 142 d'une part avec une liberté de rotation autour de l'axe X de basculement zénithal, et d'autre part avec une liberté de rotation autour d'un axe Y de réglage azimutal, qui est perpendiculaire à la fois à l'axe X de basculement zénithal et au plan moyen des rainures 141 et 142.

Grâce à cet agencement, le sous-ensemble de transmission 210 peut être facilement orienté par rapport au boîtier 1, donc par rapport au mur sur lequel ce boîtier est fixé.

Le sous-ensemble de transmission 210 tel qu'illustré comprend trois diodes infrarouge, dont la première, 211, est orientée perpendiculairement au circuit imprimé 21.

Les deuxième et troisième diodes infrarouge 212 et 213 sont disposées dans un même plan perpendiculaire au circuit imprimé 21, de façon oblique par rapport à ce circuit imprimé 21, et symétriquement l'une de l'autre par rapport au plan axial médian du circuit imprimé 21 qui passe par la première diode 211.

De préférence, le dispositif de l'invention comprend également un ou deux patins 5, par exemple conformés en pinces, ces patins étant susceptibles d'être fixés au capot 11 et permettant de bloquer la coiffe 4 dans la position qui lui a été assignée par réglage.

Les composants électroniques comprennent typiquement des composants électroniques de commande 220 et des composants électroniques de puissance 230.

Les composants électroniques de commande 220 sont par exemple implantés sur un circuit imprimé 22 qui est lui-même relié au circuit imprimé 21 par la nappe multiconductrice 3.

Les composants électroniques de puissance 230 peuvent quant à eux être implantés sur un circuit imprimé 23 qui disposé dans le boîtier 1 parallèlement au circuit imprimé 22, et qui est relié à ce circuit imprimé 22 par des conducteurs rigides (non visibles sur les figures).

En pratique, les circuits imprimés 22 et 23 peuvent être logés dans le volume interne que définissent ensemble le socle 12 et le capot 11.

Les diodes infrarouge 211 à 213 peuvent constituer chacune un récepteur de signaux infrarouge, un émetteur de signaux infrarouge, ou à la fois un récepteur et un émetteur de signaux infrarouge.

Une diode infrarouge fonctionnant en récepteur transmet aux composants 220 du circuit 22 les signaux optiques qu'elle reçoit, alors qu'elle émet elle-même des signaux optiques en réponse à des signaux électriques qu'elle reçoit de ces composants 220 lorsqu'elle fonctionne en émetteur.

Le dispositif de l'invention est particulièrement bien adapté à la réalisation d'un relais de commande sans fil d'un appareil électrique, tel qu'un climatiseur.

## Revendications

1. Dispositif de transmission infrarouge, comprenant au moins un boîtier (1) conçu pour être fixé à un support tel qu'un mur, un premier circuit imprimé (21), au moins un sous-ensemble de transmission (210), et des composants électroniques (220, 230), le sous-ensemble de transmission (210) étant monté sur le premier circuit imprimé (21), étant relié aux composants électroniques (220, 230) et comprenant au moins une diode infrarouge (211), ce dispositif comprenant des premier et deuxième tourillons (41, 42) auxquels le premier circuit imprimé (21) est rendu solidaire, et ces tourillons (41, 42) étant disposés dans une position diamétrale du premier circuit imprimé (21) de manière à former ensemble un axe (X) de basculement zénithal pour ce premier circuit imprimé (21), **caractérisé en ce que** le sous-ensemble de transmission (210) est relié aux composants électroniques (220, 230) au moyen de conducteurs souples (3), et **en ce que** le boîtier (1) comporte des première et deuxième rainures (141, 142) au moins partiellement circulaires, s'étendant dans un même plan moyen, et dans lesquelles les premier et deuxième tourillons (41, 42) sont respectivement logés à la fois avec une liberté de rotation autour de l'axe (X) de basculement zénithal, et avec une liberté de rotation autour d'un axe (Y) de réglage azimutal, perpendiculaire à l'axe (X) de basculement zénithal et au plan moyen des rainures (141, 142), le premier circuit imprimé (21) étant ainsi monté dans une position réglable dans le boîtier (1).

2. Dispositif suivant la revendication 1, **caractérisé en ce que** le boîtier (1) comprend un capot (11) et une pièce de verrouillage (13) montée de façon amovible dans le capot (11), les première et deuxième rainures (141, 142) étant définies entre ce capot (11) et cette pièce de verrouillage (13).

3. Dispositif suivant l'une quelconque des revendications précédentes, **caractérisé en ce qu'**il comprend une coiffe hémisphérique (4) portant les tourillons (41, 42) et présentant une ouverture circulaire (40) interne au boîtier (1), **en ce que** le premier circuit imprimé (21) est encliqueté dans l'ouverture (40) de la coiffe (4) et présente une forme au moins partiellement circulaire, et **en ce que** la coiffe (4) est transparente aux rayons infrarouge et renferme le sous-ensemble de transmission (210).

4. Dispositif suivant l'une quelconque des revendications précédentes, **caractérisé en ce que** le sous-ensemble de transmission (210) comprend au moins une première diode infrarouge (211) orientée perpendiculairement au premier circuit imprimé (21), et des deuxième et troisième diodes infrarouge (212, 213) disposées dans un même plan perpendiculaire au premier circuit imprimé (21), de façon oblique par rapport à ce premier circuit imprimé (21), et symétriquement l'une de l'autre par rapport à un plan axial médian du premier circuit imprimé (21) passant par la première diode (211).

5. Dispositif suivant l'une quelconque des revendications précédentes combinée aux revendications 2 et 3, **caractérisé en ce qu'**il comprend en outre au moins un patin (5) sélectivement fixé au capot (11) et conçu pour bloquer la coiffe (4) dans une position réglée.

6. Dispositif suivant l'une quelconque des revendications précédentes, **caractérisé en ce que** les composants électroniques (220, 230) comprennent des composants électroniques de commande (220) et des composants électroniques de puissance (230, **en ce que** les composants électroniques de commande (220) sont implantés sur un deuxième circuit imprimé (22), lui-même relié au premier circuit imprimé (21) par une nappe multiconductrice (3) constituant lesdits conducteurs souples (3), et **en ce que** les composants électroniques de puissance (230) sont implantés sur un troisième circuit imprimé (23), disposé dans le boîtier (1) parallèlement au deuxième circuit imprimé (22) et relié à ce deuxième circuit imprimé (22) par des conducteurs rigides.

7. Dispositif suivant l'une quelconque des revendications précédentes combinée aux revendications 2 et 6, **caractérisé en ce que** le boîtier (1) comprend en outre un socle (12) sur lequel le capot (11) est encliqueté, les deuxième et troisième circuits imprimés (22, 23) étant logés dans un volume interne défini par le socle (12) et le capot (11).

8. Dispositif suivant l'une quelconque des revendications précédentes combinée à la revendication 6, **caractérisé en ce que** les composants électroniques de commande (220) sont conçus pour utiliser les diodes infrarouge (211-213) au moins en tant que récepteurs de signaux infrarouge.

9. Dispositif suivant la revendication 8, **caractérisé en ce que** les composants électroniques de commande (220) sont conçus pour utiliser les diodes infrarouge (211-213) en tant qu'émetteurs et récepteurs de signaux infrarouge.

10. Application du dispositif suivant l'une quelconque des revendications précédentes à la réalisation d'un relais de commande d'un appareil électrique, tel qu'un climatiseur.
